# EUROPÄISCHE PATENTSCHRIFT

(11) **EP 4 402 004 B1**
(45) Veröffentlichungstag und Bekanntmachung des Hinweises auf die Patenterteilung: **10.06.2026**
(21) Anmeldenummer: 22773708.7
(22) Anmeldetag: 08.09.2022
(51) Int. Cl.: B60L 3/04

(54) **SCHALT- UND SCHUTZVORRICHTUNG FÜR EIN HOCHVOLT-BORDNETZ**
SWITCHING AND PROTECTING DEVICE FOR A HIGH-VOLTAGE VEHICLE ELECTRICAL SYSTEM
DISPOSITIF DE COMMUTATION ET DE PROTECTION POUR UN SYSTÈME ÉLECTRIQUE DE VÉHICULE À HAUTE TENSION

(30) Priorität: 16.09.2021 DE 102021123969
(43) Veröffentlichungstag der Anmeldung: 24.07.2024
(73) Patentinhaber: MAN Truck & Bus SE, 80995 München (DE)
(72) Erfinder: KALASS, Rainer, 91189 Rohr (DE); KRATZER, Sebastian, 80995 München (DE); ENGELHARDT, Alexander, 80995 München (DE); KARANAM, Mouli Nikunz, 80995 München (DE)
(86) Internationale Anmeldenummer: PCT/EP2022/074964
(87) Internationale Veröffentlichungsnummer: WO 2023/041413

(56) Entgegenhaltungen:
- DE-A1- 102019 130 431
- DE-B3- 102019 206 267
- DE-T5- 112005 001 085
- US-A- 5 668 693
- US-A1- 2020 079 222

## Beschreibung

Die Erfindung betrifft eine Schalt- und Schutzvorrichtung für ein Hochvolt-Bordnetz. Die Erfindung betrifft ferner ein Fahrzeug, vorzugweise ein Nutzfahrzeug, mit einer solchen Schalt- und Schutzvorrichtung.

Elektrisch angetriebene Nutzfahrzeuge weisen zumeist mehrere Traktionsbatterien mit hohen Spannungen und hohen Stromlieferfähigkeiten auf. Diese Traktionsbatterien benötigen Schaltvorrichtungen (Leistungsschalter) für den Regelbetrieb (Laden, Entladen beim Fahren und Ladungsausgleich zwischen den Batterien (sog. Balancing-Mode)), aber auch Schutzvorrichtungen gegen Kurzschlüsse. Im Kurzschlussfall muss die Batterie in kürzester Zeit und mit hoher Sicherheit vom Hochvoltverteiler (HV-Link) des Fahrzeugbordnetzes abgetrennt werden können, um fatale Fehlstromflüsse und daraus resultierende thermische Ereignisse zu verhindern sowie die Sekundärbatterieeinzelzellen vor Überlastung und daraus resultierende schädigende Wirkung zu schützen. Weiterhin muss der Hochvoltkreis (HV-Link) des Fahrzeuges beim Ladevorgang sehr schnell vom Ladegerät weggeschaltet werden können, wenn im Ladegerät oder den Verbindungsleitungen selber ein Kurzschlussdefekt auftreten sollte.

Aus der Praxis sind hierzu folgende Lösungsansätze bekannt:
Mittels Überwachung von Strom und Spannung durch ein Steuergerät und daran angeschlossene Sensoren (z. B. Shunt mit Messung des Spannungsabfalles) wird ab bestimmten Schwellwerten von diesem Steuergerät der Zünder einer Sprengsicherung ausgelöst und die galvanische Verbindung von der Traktionsbatterie zum Bordnetz (HV-Link) aufgetrennt. Die sogenannte "Pyro-Fuse" ist für die einmalige Verwendung vorgesehen und muss nach dem Auslösen - nach der Reparatur des Kurzschlussverursachers - immer physisch ersetzt werden. Die Gesamtreaktionszeit dieser Sicherungseinrichtung gegen fatale Kurzschlüsse benötigt heute eine Zeitspanne von ca. 5 Millisekunden.

Die Zeitspanne dieses Ansatzes zur Sicherheitsabtrennung teilt sich auf in ca. 2 Millisekunden Zeit für die Software des U-I-Sensorsteuergerätes zur eineindeutigen Entscheidung, dass ein unzulässiger Kurzschluss vorliegt, ca. 1 Millisekunde, die der Zünder benötigt, um die Sprengung der galvanischen Verbindung auszulösen und ca. 2 Millisekunden, die die Schutzvorrichtung benötigt, um den elektrisch verursachten Lichtbogen zu löschen.

Die Softwarefunktion im U-I-Sensorsteuergerät wird in Abhängigkeit der Sensorsignale und deren Anstiegszeiten so programmiert, dass eine Unterscheidung zwischen Regelbetrieb, d. h. normale Stromanstiegszeiten z. B. beim Zuschalten von Verbrauchern oder im Beschleunigungsmodus des Fahrmotors, und Kurzschlussfall ermöglicht wird. Insbesondere beim Anfahren fließen hohe Anfangsströme, da das Drehmoment eines Fahrmotors bei Drehzahl Null am höchsten ist. Also erst ab Überschreitung bestimmter Strom- und Gradientenwerte löst das U-I-Sensorsteuergerät die irreversible Abtrennung der Traktionsbatterie vom Bordnetz aus.

Nachteilig an den bekannten Ansätzen sind somit die relativ lange Gesamtreaktionszeit, sowie die Aufwände, die nach einem Kurzschlussfall entstehen, da dieses irreversible Sicherungselement nach dem Auslösen aufwändig ausgetauscht werden muss. Nutzfahrzeuge weisen in der Regel mehrere separate Traktionsbatterien auf. Entsprechend werden in diesem Fall bei einem äußeren Kurzschluss am HV-Link alle Pyro-Fuses nahezu gleichzeitig ausgelöst. Entsprechend erhöhen sich die Aufwände, um das Fahrzeug nach Eintritt eines Kurzschlusses wieder fahrfähig zu machen.

Aus der Praxis ist ferner eine HV-Schutzvorrichtung bekannt, die auf Basis des Levitationseffektes in der Lage ist, aus dem Kurzschlussstrom selber die Verbindung aufzutrennen. Fraglich bei diesem Konzept sind aber die einstellbaren Abschaltschwellen, da sie in starker Abhängigkeit der zulässigen und unzulässigen Ströme, sowie der Geometrie der Kontakte, deren stabilisierten Oberflächenrauhigkeiten über die Gebrauchsdauer und deren Schaltvorgängen und nicht zuletzt in Abhängigkeit zu der tatsächlichen Anzahl und Verteilung der Stromengen stehen. Die US2020079222A1 offenbart Schalt- und Schutzvorrichtung für ein Hochvolt-Bordnetz, umfassend) eine Kontaktpaarung mit einer Doppelkontaktstelle, bei der zwei Festkontaktstücke mittels einer beweglichen Kontaktbrücke elektrisch leitend verbindbar und wieder trennbar sind; einen ansteuerbaren elektromechanischen Antrieb, mittels dessen eine Steuerkraft auf die Kontaktbrücke erzeugbar ist, zum wahlweisen Schließen und Öffnen der elektrisch leitenden Verbindung; und eine erste Steuereinheit, wobei die erste Steuereinheit eingerichtet ist, Ausgangssignale zur Ansteuerung des elektromechanischen Antriebs zu erzeugen; gemäß dem Stand der Technik.

Die DE 10 2019 206 267 A1 offenbart einen Schutzschalter mit einem Hauptstrompfad, der ein steuerbares erstes Schaltelement mit einem ersten Steuereingang aufweist, der gegen ein steuerbares zweites Schaltelement einer Ansteuerschaltung geführt ist.

Die DE 11 2005 001 085 T1 offenbart eine Zustandserfassungsvorrichtung, die in einem elektromagnetischen Betätigungssystem angeordnet ist.

Die DE 10 2019 130 431 A1 offenbart Verfahren zum Bestimmen eines Ladezustands einer Fahrzeugbatterie eines Fahrzeugs.

Es ist somit eine Aufgabe der Erfindung, eine verbesserte Technik zur Absicherung eines Hochvolt-Bordnetzes im Kurzschlussfall bereitzustellen, mit der Nachteile herkömmlicher Techniken vermieden werden können. Die Aufgabe der Erfindung ist es insbesondere, eine verbesserte Technik zur Absicherung eines Hochvolt-Bordnetzes im Kurzschlussfall bereitzustellen, die verbesserte Gesamtreaktionszeiten und geringe Aufwände im Kurzschlussfall ermöglicht.

Diese Aufgaben werden durch eine Schalt- und Schutzvorrichtung für ein Hochvolt-Bordnetz mit den Merkmalen des Patentanspruchs 1 gelöst. Vorteilhafte Weiterbildungen sind in den abhängigen Ansprüchen und der Beschreibung angegeben.

Ein allgemeiner Gesichtspunkt der Erfindung betrifft eine Schalt- und Schutzvorrichtung für ein Hochvolt-Bordnetz. Die Schalt- und Schutzvorrichtung umfasst eine Kontaktpaarung mit einer Doppelkontaktstelle, bei der zwei Festkontaktstücke mittels einer beweglichen Kontaktbrücke elektrisch leitend verbindbar und wieder trennbar sind und einen ansteuerbaren elektromechanischen Antrieb, mittels dessen eine Steuerkraft auf die Kontaktbrücke erzeugbar ist, zum wahlweise Schließen und Öffnen der elektrisch leitenden Verbindung. Die Schalt- und Schutzvorrichtung dient bevorzugt dazu, um eine oder mehrere Hochvolt-Batterien (Traktionsbatterie) vom Bordnetz zu trennen oder zum Bordnetz zuzuschalten. Die Schalt- und Schutzvorrichtung kann beispielsweise als Hauptschütz fungieren.

Die Schalt- und Schutzvorrichtung umfasst ferner eine Steuereinheit, die eingerichtet ist, Ausgangssignale zur Ansteuerung des elektromechanischen Antriebs zu erzeugen und in Abhängigkeit eines, vorzugsweise strom- und/oder spannungsbasierten, Eingangssignals zu bestimmen, ob eine erste Sicherheitsabschaltbedingung erfüllt ist, und bei Erfüllung der ersten Sicherheitsabschaltbedingung ein Ausgangssignal zum Öffnen der elektrisch leitenden Verbindung zu erzeugen. Diese Steuereinheit wird nachfolgend als erste Steuereinheit bezeichnet, zur besseren Unterscheidbarkeit von einer weiteren Steuereinheit, die nachfolgend als zweite Steuereinheit bezeichnet wird. Aus diesem Grund wurde die Sicherheitsabschaltbedingung als erste Sicherheitsabschaltbedingung bezeichnet, zur besseren Unterscheidbarkeit von einer weiteren Sicherheitsabschaltbedingung, die nachfolgend als zweite Sicherheitsabschaltbedingung beschrieben wird und von der zweiten Steuereinheit geprüft wird. Die erste Steuereinheit ist als anwendungsspezifische integrierte Schaltung, ASIC, oder als eine vor Ort programmierbare Logikgatter-Anordnung, FPGA, oder als reine Analogschaltung mittels Komparatorschaltung ausgebildet. Die erste Steuereinheit weist somit vorzugsweise keine Mikroprozessor auf, im Unterschied zu einem Mikrocontroller bzw. einem herkömmlichen Steuergerät.

Die erfindungsgemäße Schalt- und Schutzvorrichtung bietet somit einerseits den besonderen Vorzug, dass die Schutzschaltung durch den ansteuerbaren elektromechanischen Antrieb reversibel ausgeführt ist, d. h., dass keine irreversiblen Sicherungselemente nach einem Kurzschlussfall ausgetauscht werden müssen, sondern - nach erfolgter Reparatur des Fahrzeuges - die Traktionsbatterie(n) direkt wieder zugeschaltet werden kann (können). Gleichzeitig kann eine kurze Gesamtreaktionszeit realisiert werden, da die den elektromechanischen Antrieb ansteuernde erste Steuereinheit nicht als Mikrocontroller ausgeführt ist, sondern als eine Steuereinheit, die ohne zeitraubende Softwareroutinen eines Mikrocontrollers auskommt. Die erste Steuereinheit ist stattdessen als AISC, FPGA oder reine Analogschaltung mittels Komparatorschaltung ausgebildet.

In einer besonders bevorzugten Ausführungsform umfasst die Schalt- und Schutzvorrichtung ferner eine zweite Steuereinheit, die als Mikrocontroller ausgebildet ist, und die zur Datenkommunikation, vorzugsweise über einen Datenbus, mit einer Batteriesteuerung, z. B. einem Batterie-Management-System, BMS, oder Battery management control module, BMCM, eingerichtet ist. Hierbei ist die zweite Steuereinheit eingerichtet, zur Durchführung eines Regelbetriebs des Hochvolt-Bordnetzes Steuersignale zum wahlweisen Schließen und Öffnen der Kontaktpaarung bzw. der elektrisch leitenden Verbindung zu erzeugen und an die erste Steuereinheit zu übermitteln. Die erste Steuereinheit ist hierbei eingerichtet, in Abhängigkeit der Steuersignale der zweiten Steuereinheit entsprechende Ausgangssignale zur Ansteuerung des elektromechanischen Antriebs zum wahlweisen Schließen und Öffnen der elektrisch leitenden Verbindung zu erzeugen, um die Steuersignale der zweiten Steuereinheit umzusetzen.

Gemäß dieser Ausführungsform umfasst die Schalt- und Schutzvorrichtung somit einen ersten Schaltungsteil (erste Steuereinheit), der schnell, unmittelbar und ohne zeitraubende Softwareroutinen eines Mikroprozessors im Kurzschlussfall direkt in Reaktion auf das Eingangssignal die galvanische Trennung der Kontaktpaarung mittels des elektromechanischen Antriebs auslösen kann. Dagegen kann der Regelbetrieb, also das reguläre Ein- und Ausschalten mittels der Kontaktpaarung, durch die zweite Steuereinheit mittelbar gesteuert werden. Gemäß dieser Ausführungsform kann sowohl die Funktion der regulären Ein- und Ausschaltung der Traktionsbatterie gegenüber dem HV-Link (Hochvoltbordnetz) als auch die Sicherheitsabschaltung im Falle von unzulässigen Energieflüssen (Kurzschlussfall) in einer Vorrichtung, umfassend die erste und zweite Steuereinheit, vereint werden. Entsprechend besteht die Beschaltung der Traktionsbatterie aus weniger Elementen als bisher. Die Schalt- und Schutzvorrichtung kann somit einen Hauptschütz ausbilden.

In einer weiteren Ausführungsform umfasst die Schalt- und Schutzvorrichtung ferner eine vorgespannte erste Feder, die ausgebildet ist, eine erste Öffnungskraft auf die Kontaktbrücke zu erzeugen. Gemäß einer weiteren Ausführungsvariante umfasst der elektromechanische Antrieb mindestens eine in Signalverbindung mit der ersten Steuereinheit stehende erste Antriebsspule, die ausgebildet ist, eine zur ersten Öffnungskraft entgegengesetzte magnetische Schließkraft gemäß dem Ausgangssignal zu erzeugen. Bevorzugt ist die Doppelkontaktstelle durch die als Rückstellfeder ausgebildete erste Feder stromlos immer geöffnet ("engl. normally open"), was die Betriebssicherheit erhöht.

Eine mögliche Weiterbildung sieht vor, dass die mindestens eine erste Antriebsspule zwei erste Antriebsspulen umfasst und die erste Steuereinheit ausgebildet ist, bei Erfüllung einer Einschaltbedingung beide erste Antriebsspulen zu bestromen und nach Schließen der elektrischen Verbindung und zum Halten der Schließstellung nur noch eine der ersten Antriebsspulen als Haltespule zu bestromen. Dies ist besonders vorteilhaft, da einerseits der Einschaltvorgang bedingt durch die Krafterhöhung der zwei Spulen zur Überwindung der Federkraft beschleunigt wird, anderseits ein energieeffizienter Betrieb ermöglicht wird, da nach Schließen der Kontaktpaarung nur noch eine der Spulen als Haltespule bestromt wird.

In einer weiteren Ausführungsvariante umfasst der elektromechanische Antrieb mindestens eine in Signalverbindung mit der ersten Steuereinheit stehende zweite Antriebsspule, die ausgebildet ist, eine zur ersten Öffnungskraft der Feder parallele zweite Öffnungskraft gemäß dem Ausgangssignal zu erzeugen. Dadurch kann das Öffnen der Kontaktpaarung beschleunigt werden, was insbesondere im Fehlerfall (Kurzschluss) besonders vorteilhaft ist. Hierbei sind unterschiedliche Ausführungen denkbar. Es ist möglich, dass die zweite Öffnungskraft durch die mindestens eine zweite Antriebsspule unmittelbar als magnetische Kraft erzeugt wird. Alternativ oder zusätzlich kann die zweite Öffnungskraft durch die mindestens eine zweite Antriebsspule mittelbar durch Betätigung einer vorspannbaren und/oder arretierbaren zweiten Feder erzeugt werden, wobei die zweite Feder durch die mindestens eine zweite Antriebsspule in einen vorgespannten und/oder arretierten Zustand bringbar ist. Die zweite Feder wird dann zum Öffnen gelöst. Da es immer etwas dauert, bis sich das Magnetfeld der Antriebspule zum Erzeugen der Kraft aufgebaut hat, ermöglicht die Variante mit der zweiten vorgespannten und/oder arretierten Feder eine besonders schnelle Erzeugung der Öffnungskraft und damit ein besonders schnelles Schaltverhalten der Schalt- und Schutzvorrichtung.

Die Schalt- und Schutzvorrichtung kann ferner einen durch eine Niedervolt-Spannung gespeisten Speicher für eine elektrische Abschaltenergie zur Versorgung der mindestens einen zweiten Antriebspule mit elektrischer Energie aufweisen, der vorzugsweise durch einen Kondensator oder eine Spule gebildet ist. Dadurch kann die Reaktionsgeschwindigkeit weiter verbessert werden.

Eine Weiterbildung hiervon sieht vor, dass die elektrische Abschaltenergie eine galvanisch eng benachbarte elektrische Abschaltenergie zur niederohmigen Versorgung der mindestens einen zweiten Antriebspule mit elektrischer Energie ist. Dadurch kann die Reaktionsgeschwindigkeit weiter verbessert werden. Mit "galvanisch eng benachbart" kann z. B. ein Abblockkondensator oder einen Energiespeicher mit einer bestimmten Kapazität (C = Amperesekunden pro Volt) definierter Größe gemeint sein, der mit einem vernachlässigbar geringen ohmschen Widerstand möglichst direkt am Verbraucher angeschlossen ist, so dass der Spannungsabfall bei schneller Inanspruchnahme dieser Energie so gering wie technisch möglich ist. Umgekehrt: Je länger die Kupferverbindung zwischen dem Kondensator und dem/der niederohmigen Verbraucher ist, desto höher ist der ohmsche Leitungswiderstand dieser galvanischen Verbindung. Eine lange Leitung ist also ein erhöhter Widerstand bestimmter Größe. Bei der Bestromung einer Induktivität L über einen MOSFET (hier: die Arbeitsspule der mindestens einen zweiten Antriebsspule) eilt die Spannung um 90° voraus, da durch diese induktive Last die sogenannte Gegeninduktivität zunächst ihren physikalischen Beharrungszustand aufrechterhalten will, der Stromfluss ist daher im Einschaltmoment erst mal Null. Um das Magnetfeld in der Arbeitsspule also so schnell wie möglich aufbauen zu können, ist es besonders vorteilhaft, wenn der ohmsche Widerstand zwischen dieser Spule und der versorgenden Energiequelle so klein wie technisch möglich ist. Diese Niederohmigkeit lässt also einen Geschwindigkeitsgewinn beim Aufbau des Magnetfeldes - und damit bei der Reaktionszeit des abschaltenden Schützes - erwarten.

In einer Ausführungsform ist die erste Steuereinheit eingerichtet, bei Erfüllung der ersten Sicherheitsabschaltbedingung ein erstes Ausgangssignal an die mindestens eine erste Antriebsspule zum Abbau und/oder zur Reduzierung der Schließkraft und ein zweites Ausgangssignal an die mindestens eine zweite Antriebsspule zum Aufbau und/oder zur Erhöhung der zweiten Öffnungskraft zu erzeugen. Entsprechend können die Antriebsspulen zusammenwirken, um bei Erfüllung einer Sicherheitsabschaltbedingung, also z. B. im Kurzschlussfall, zuverlässig die Doppelkontaktstelle zu öffnen. Anders ausgedrückt werden zum Öffnen der Kontaktpaarung von der ersten Steuereinheit, vorzugsweise zeitsynchron, die erste Antriebspule entregt und die zweite Antriebspule erregt. Damit entfällt die Magnetkraft der als Haltespule dienenden ersten Antriebsspule, gleichfalls entsteht die Magnetkraft für den Anker der als Öffnungsspule dienenden zweiten Antriebsspule, kraftverstärkt durch die Rückstellfeder. Aus dieser Konstruktions- und Schaltungsanordnung ergibt sich ein Geschwindigkeitsgewinn der Öffnungsbewegung der Kontaktbrücke gegenüber konventionellen Schützen.

Es ist ferner möglich, dass die mindestens eine erste Antriebsspule und mindestens eine zweite Antriebsspule auf gegenüberliegenden Seiten in Bezug auf die Festkontaktstücke angeordnet sind, oder auf der gleichen Seite in Bezug auf die Festkontaktstücke angeordnet sind. Je nach verfügbarem Bauraum kann die Schalt- und Schutzvorrichtung entsprechend ausgeführt sein.

In einer weiteren Ausführungsform ist das Eingangssignal der ersten Steuereinheit ein strom- und/oder spannungsbasierter Messwert, der weiter vorzugsweise an einer abgeschirmten Leitung als Induktionsstromwerte aus einer Stromzange in einem Hauptstrompfad oder an einem Shunt ermittelt wird. Aus einem solchen Messwert, z. B. in Abhängigkeit der Stromanstiegszeiten und/oder der Stromhöhen, kann vorteilhaft schnell und unmittelbar festgestellt werden, ob eine Sicherheitsabschaltbedingung vorliegt. Beispielweise kann vorab anhand von experimentellen Versuchen die Stromanstiegszeiten und/oder der Stromhöhen ermittelt werden, die einerseits im Regelbetrieb auftreten und die andererseits in Fehlersituationen (Kurzschlussfällen) auftreten, um entsprechend festzulegen, wann eine Sicherheitsabschaltbedingung erfüllt ist und wann nicht.

Erfindungsgemäß ist die erste Steuereinheit eingerichtet, nach einem durch Erfüllung der ersten Sicherheitsabschaltbedingung erfolgtem Öffnen der elektrischen Verbindung erst dann ein Ausgangssignal für den elektromechanischen Antrieb zum Schließen der elektrischen Verbindung zu erzeugen, falls die erste Steuereinheit ein Freischaltsignal zur Wiederaufnahme eines Regelbetriebs des Hochvolt-Bordnetzes von einer zweiten Steuereinheit empfängt. Die zweite Steuereinheit kann hierbei wie vorstehend beschrieben als Mikrocontroller ausgeführt sein. Nach fehlerbedingtem Trennen der Kontaktpaarung ist in der Regel eine Reparatur des Fahrzeugs, z. B. zur Behebung der Kurschlussursache nötig oder zumindest eine Fehlerdiagnose, die auch ergeben kann, dass es sich um einen Fehlalarm bzw. eine Fehlauslösung gehandelt hat. Jedenfalls bietet diese Ausführungsvariante den Vorzug, dass die Kontaktpaarung wieder geschlossen werden kann, z. B. zum wiederzuschalten der Traktionsbatterie(n), falls die zweite Steuereinheit der ersten Steuereinheit hierzu die Freigabe erteilt, z. B. nach Reparatur oder erfolgter Fehlerdiagnose. Dies reduziert insbesondere bei Fehlauslösungen die Gefahr von Liegenbleibern aus unwichtigem Grund und den Aufwand einer Feldinstandsetzung (Austausch von Pyro-Fuses) bei HV-Energiebetrags-Abweichungen signifikant. Entsprechend kann die zweite Steuereinheit ferner eingerichtet sein, bei Erfüllung einer Freischaltbedingung ein Freischaltsignal zur Wiederaufnahme eines Regelbetriebs des Hochvolt-Bordnetzes an die erste Steuereinheit zu übermitteln.

Gemäß einem weiteren Aspekt kann die zweite Steuereinheit eingerichtet sein, bei Erfüllung einer zweiten Sicherheitsabschaltbedingung ein Steuersignal zum Öffnen der elektrisch leitenden Verbindung an die erste Steuereinheit zu übermitteln. Dies bietet den Vorzug, dass nicht nur die erste Steuereinheit eigenständig eine Sicherheitsabschaltung auslösen kann, sondern auch die zweite Steuereinheit zusätzlich anhand der Prüfung von weiteren Sicherheitsabschaltbedingungen eine solche Sicherheitsabschaltung über die erste Steuereinheit veranlassen kann. Während die erste Steuereinheit, z. B. als ASIC, besonders schnell auf mögliche Fehlerströme reagieren kann, können mittels der zweiten Steuereinheit vorteilhaft andere Fehlersituationen und Abschaltsituationen erkannt werden, die sich lediglich beispielhaft durch einen Datenaustausch der zweiten Steuereinheit mit der Batteriesteuerung, z. B. BMS, ergeben können und auf z. B. kritische Betriebszustände in der Traktionsbatterie (kritischer Temperaturanstieg etc.) hinweisen.

Gemäß einem weiteren Aspekt kann die zweite Steuereinheit ferner eingerichtet sein, zu Diagnosezwecken einen Funktions- oder Alterungszustand der Schalt- und Schutzvorrichtung, vorzugsweise der Kontaktpaarung, zu ermitteln, beispielsweise durch Protokollierung einer Anzahl ausgelöster Sicherheitsabschaltungen und/oder einer Anzahl von Schließ- und/oder Öffnungsvorgängen im Regelbetrieb. Der so ermittelte Funktions- oder Alterungszustand der Schalt- und Schutzvorrichtung kann von der zweiten Steuereinheit bei der Ansteuerung der ersten Steuereinheit verwendet werden, insbesondere um selbst eine Sicherheitsabschaltung (Trennung der Kontaktpaarung) durch die erste Steuereinheit auszulösen und/oder um zu bestimmen, ob nach einer durch die erste Steuereinheit erfolgte Sicherheitsabschaltung an diese ein Freigabesignal zum Wiederschließen der Kontaktpaarung gesendet werden kann.

Gemäß einem weiteren Aspekt kann die zweite Steuereinheit ferner eingerichtet sein, das Eingangssignal, vorzugsweise das strom- und/oder spannungsbasierte Eingangssignal zu empfangen, vorzugsweise zur Fehler- und Funktionsanalyse. Anders ausgedrückt empfängt die zweite Steuereinheit gemäß dieser Ausführungsform ebenfalls das Eingangssignal, welche die erste Steuereinheit verwendet, um zu prüfen, ob die erste Sicherheitsabschaltbedingung erfüllt ist, was zur Fehler- und Funktionsanalyse seitens der zweiten Steuereinheit besonders vorteilhaft ist, da direkt nachvollziehbar und protokolierbar ist, warum die erste Steuereinheit die Sicherheitsabschaltbedingung ausgelöst hat. Hierzu kann die gleiche Signalleitung oder, aus Redundanzgründen, eine zusätzliche Signalleitung verwendet werden.

Die Erfindung betrifft ferner ein Fahrzeug, das zumindest teilweise elektrisch antreibbar ist, und eine Schalt- und Schutzvorrichtung umfasst, wie sie in diesem Dokument beschrieben ist. Das Fahrzeug kann ein Nutzfahrzeug sein. In diesem Fall kann es sich bei dem Kraftfahrzeug mit anderen Worten um ein Kraftfahrzeug handeln, das durch seine Bauart und Einrichtung zur Beförderung von Personen, zum Transport von Gütern oder zum Ziehen von Anhängerfahrzeugen ausgelegt ist. Beispielsweise kann es sich bei dem Kraftfahrzeug um einen Lastkraftwagen oder einen Sattelzug handeln, der zumindest teilweise elektrisch angetrieben ist.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Schalt- und Schutzvorrichtung gemäß einer Ausführungsform der Erfindung;
- Figur 2: eine Schalt- und Schutzvorrichtung gemäß einer weiteren Ausführungsform; und
- Figur 3: ein Teil eines Hochvolt-Bordnetzes gemäß einer weiteren Ausführungsform.

Gleiche oder äquivalente Elemente sind in allen Figuren mit denselben Bezugszeichen bezeichnet und zum Teil nicht gesondert beschrieben.

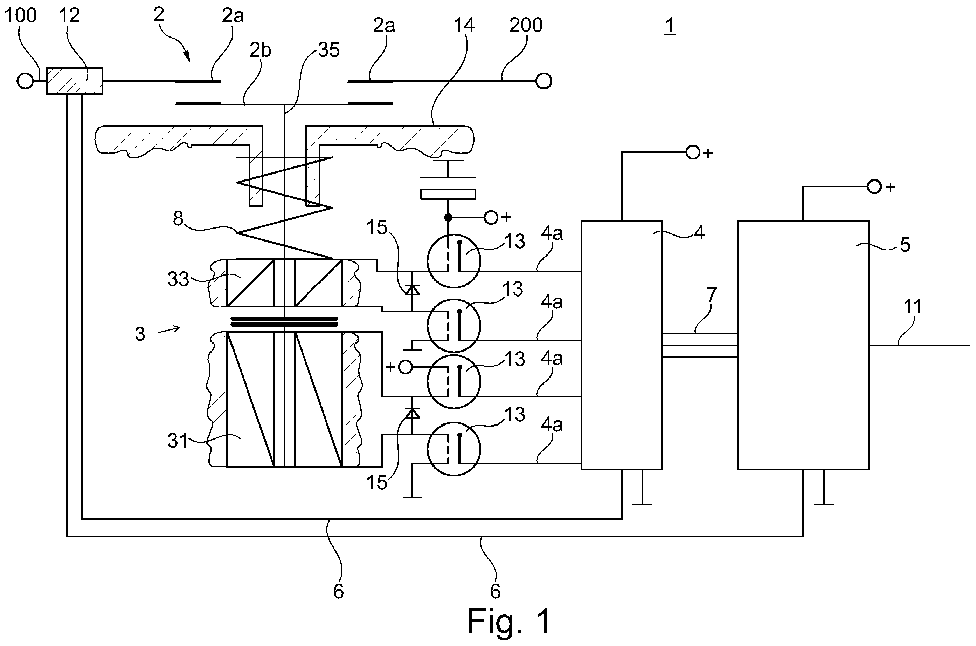

Figur 1 zeigt eine Schalt- und Schutzvorrichtung gemäß einer Ausführungsform der Erfindung.

Die Schalt- und Schutzvorrichtung 1 umfasst eine Kontaktpaarung 2 mit einer Doppelkontaktstelle, bei der zwei Festkontaktstücke 2a mittels einer beweglichen Kontaktbrücke 2b elektrisch leitend verbindbar und wieder trennbar sind. Die Schalt- und Schutzvorrichtung 1 umfasst ferner einen ansteuerbaren elektromechanischen Antrieb 3, mittels dessen eine Steuerkraft auf die Kontaktbrücke 2b erzeugbar ist, zum wahlweisen Schließen und Öffnen der elektrisch leitenden Verbindung, sowie eine erste Steuereinheit 4, die als anwendungsspezifische integrierte Schaltung, ASIC 4 ausgebildet ist. Zwischen dem Strompfad 100 und der Kontaktpaarung ist ein Stromdetektor angeordnet, der hier beispielhaft als Abgriff über einen Shunt 12 realisiert ist. Hiermit können Überströme oder unzulässige Energiebeträge, die im Fehlerfall bzw. im Kurzschlussfall auftreten, gemessen werden. Der ersten Steuereinheit 4 wird das über den Abgriff am Shunt 12 gemessene Signal als ein strom- und/oder spannungsbasiertes Eingangssignal über die Signalleitung 6 zugeführt.

Die erste Steuereinheit 4, also das ASIC 4, ist eingerichtet, Ausgangssignale zur Ansteuerung des elektromechanischen Antriebs 3 zu erzeugen und in Abhängigkeit eines des über die Signalleitung 6 zugeführten Eingangssignals zu bestimmen, ob eine erste Sicherheitsabschaltbedingung erfüllt ist, und bei Erfüllung der ersten Sicherheitsabschaltbedingung ein Ausgangssignal zum Öffnen der elektrisch leitenden Verbindung zu erzeugen. Die Sicherheitsabschaltbedingung soll erfüllt sein, wenn ein Kurzschlussstrom auftritt. Entsprechend ist der ASIC 4 fest eingerichtet, z. B. sobald ein vorab hinterlegter Spannungsgradient am Shunt 12 überschritten wird, die Sicherheitsabschaltbedingung als erfüllt anzusehen, und in diesem Fall über die Ausgangsleitungen 4a entsprechende Steuersignale an die Halbleiterschalter 13, die z. B. als MOSFETs ausgeführt sind, auszugeben, die bewirken, dass der elektromechanische Antrieb die Kontaktbrücke 2b von den Festkontaktstücken 2a trennt.

Mit anderen Worten vergleicht der ASIC 4 somit gemäß seiner Taktrate fortlaufend, ob das über die Signalleitung 6 zugeführte Strom- bzw. Spannungssignal mit einem hinterlegten Profil oder Kriterium übereinstimmt, dass einer Erfüllung der Sicherheitsabschaltbedingung zugeordnet ist. Das Profil oder Kriterium kann dabei bereits zeitlich vor der realen Ausbildung von zu hohen Energiebeträgen schädigender oder lebensdauereinschränkenden Wirkungen auf die Sekundärbatterieeinzelzellen die Sicherheitsabschaltung vollziehen. Der besondere Vorteil einer ASIC 4 ist, dass dieser als festprogrammierter Baustein sehr schnell arbeitet, typischerweise mit einer Taktrate 1 - 3 Mhz, so dass im µs-Bereich das Eingangssignal der Signalleitung 6 abgetastet wird. Die Abschaltroutine für die Kontaktpaarung 2, d. h. das Trennen der Kontaktpaarung 2, wird somit unmittelbar über das Eingangssignal der Signalleitung 6 mittels des ASICs 4 getriggert, so dass im Fehlerfall ein sehr schnelles Abschalten (Trennen) der Kontaktpaarung ermöglich wird. Ein im Vergleich hierzu langsameres Ablaufen von SoftwareRoutinen wie bei einem Mikrocontroller kann vermieden werden. Die erste Steuereinheit weist bevorzugt keinen Mikroprozessor auf.

Vorstehend wurde bereits festgestellt, dass alternativ zu der Ausführung der ersten Steuereinheit 4 als ASIC diese auch als FPGA oder als reine Analogschaltung mittels Komparatorschaltung ausgebildet sein kann. Die Komparatorschaltung vergleicht, ob das Eingangssignal der Leitung 6 mit einem vorab hinterlegten Signal(profil) übereinstimmt, um festzustellen, ob die Abschaltbedingung erfüllt ist oder nicht.

Aus Redundanzgründen und im Hinblick auf die funktionale Sicherheit sind mehrere Halbleiterschalter 14 vorgesehen, um jeweils einen redundanten Abschaltpfad bereitzustellen. Gezeigt sind ferner Freilaufdioden 15, um Energie aus einem Induktionsrückstoß vernichten zu können.

Nachfolgend wird der von der ersten Steuereinheit 4 ansteuerbare elektromechanische Antrieb 3 näher beschrieben. Der elektromechanische Antrieb 3 umfasst mindestens eine in Signalverbindung mit der ersten Steuereinheit 4 stehende erste Antriebsspule 31, die ausgebildet ist, im bestromten Zustand eine magnetische Schließkraft gemäß dem Ausgangssignal zu erzeugen. Die magnetische Schließkraft bewirkt, dass der sich an einer Abstützung 14 über die Rückstellfeder 8 abstützende Ankermechanismus 35 die Kontaktbrücke 2b in Richtung der Festkontaktstücke 2a bewegt.

Ferner ist eine vorgespannte erste Feder (Rückstellfeder) 8 vorgesehen, die als Rückstellfeder ausgebildet ist, eine erste Öffnungskraft auf die Kontaktbrücke zu erzeugen, so dass die Kontaktpaarung 2 stromlos immer geöffnet ("engl. normally open") ist. Die magnetische Schließkraft der ersten Antriebsspule 31 wirkt entgegengesetzt zu der ersten Öffnungskraft der ersten Feder 8. Um die Kontaktpaarung 2 zu schließen, muss somit die Antriebsspule 31 bestromt werden, derart, dass die Schließkraft die Federkraft der ersten Feder 8 übersteigt. Die erste Antriebsspule 31 dient somit als Haltespule.

Der elektromechanische Antrieb 3 umfasst ferner mindestens eine in Signalverbindung mit der ersten Steuereinheit stehende zweite Antriebsspule 33, die ausgebildet ist, eine zur ersten Öffnungskraft der ersten Feder 8 parallele zweite Öffnungskraft gemäß dem Ausgangssignal zu erzeugen. Die zweite Antriebsspule 33 dient somit als Öffnungsspule. Die Kombination aus der vorgespannten Rückstellfeder 8 des Einschaltmagneten sowie der zweite aktive Antrieb 33 zum Öffnen überlagern die Kräfte zum schnellen Öffnen der Kontaktbrücke 2b. Es können zwei oder geradzahlig mehrere Spulen angeordnet sein.

Zum Öffnen der Kontaktpaarung 2 werden von der ersten Steuereinheit 4 zeitsynchron die erste Antriebspule (Haltespule) 31 entregt und die zweite Antriebspule (Öffnungsspule) 33 erregt. Damit entfällt die Magnetkraft der Haltespule 31, gleichfalls entsteht die Magnetkraft für den Anker der Öffnungsspule 33, kraftverstärkt durch die Rückstellfeder 8. Aus dieser Konstruktions- und Schaltungsanordnung ergibt sich ein Geschwindigkeitsgewinn der Öffnungsbewegung der Kontaktbrücke 2b gegenüber konventionellen Schützen. Der oder die Lichtbögen - insbesondere im Kurzschlussöffnungsfall - können optional mittels bekannten Kühl-, Blas- oder Magnetfeldvorrichtungen zur Verlöschung in finnenartig geformte Löschkammern mit dem Zweck der Lichtbogenzerstückelung gezwungen werden (nicht dargestellt).

Die erste Steuereinheit 4 ist nun so eingerichtet, dass wenn anhand des über die Signalleitung 6 eingangsseitig empfangen strom- und/oder spannungsbasierten Signals festgestellt wird, dass eine erste Sicherheitsabschaltbedingung erfüllt ist, dann entsprechende Ausgangssignale über die Leitungen 5a an die Halbleiterschalter 13 ausgegeben werden. Diese Ausgangsignale bewirken dann, dass die Bestromung der ersten Antriebsspule 31 gestoppt oder zumindest reduziert wird, um deren Schließkraft zu reduzieren oder auf null zu stellen und die zweite Antriebsspule 33 zur Erzeugung der zweiten Öffnungskraft bestromt wird. Entsprechend wird die Kontaktbrücke 2b nach unten bewegt und die Kontaktpaarung 2 getrennt. Die erste Antriebsspule 31 und die zweite Antriebsspule 33 sind bei diesem Ausführungsbeispiel beispielhaft auf der gleichen Seite in Bezug auf die Festkontaktstücke 2a angeordnet.

Die Schalt- und Schutzvorrichtung 1 umfasst ferner eine zweite Steuereinheit 5, die als Mikrocontroller ausgebildet ist, und zur Datenkommunikation, vorzugsweise über einen Datenbus 11, mit einem Batterie-Management-System, BMS, eingerichtet ist. Diese zweite Steuereinheit 5 ist ferner eingerichtet, zur Durchführung eines Regelbetriebs des Hochvolt-Bordnetzes Steuersignale zum wahlweisen Schließen und Öffnen der elektrisch leitenden Verbindung zu erzeugen und an die erste Steuereinheit 4 über die Signalleitungen 7 zu übermitteln. Die erste Steuereinheit 4 ist hierbei eingerichtet, in Abhängigkeit der über die Signalleitungen 7 empfangenen Steuersignale der zweiten Steuereinheit 5, entsprechende Ausgangssignale zur Ansteuerung des elektromechanischen Antriebs 3 zum wahlweisen Schließen und Öffnen der elektrisch leitenden Verbindung zu erzeugen. Die zweite Steuereinheit 5 ist eingangsseitig ebenfalls mit der Signalleitung 6 verbunden, wobei aus Redundanzgründen hier optional zwei separate Signalleitungen 6 vorgesehen sind.

Die zweite Steuereinheit 5 stellt somit die Funktion der Steuerung der regulären Ein- und Ausschaltung der Hochvolt-Batterie gegenüber dem HV-Link (Hochvoltbordnetz) mittels der Kontaktpaarung 2, während die erste Steuereinheit 4 für die Sicherheitsabschaltung im Falle von unzulässigen Energieflüssen (Kurzschlussfall) verantwortlich ist. Vorstehend wurde jedoch bereits festgestellt, dass darüber hinaus auch die zweite Steuereinheit 5 zusätzlich ein Trennen der Kontaktpaarung im Fehlerfall über die erste Steuereinheit 4 triggern kann. Ist beispielsweise eine zweite Sicherheitsabschaltbedingung erfüllt, die von der zweiten Steuereinheit 5 geprüft wird, kann diese ein Steuersignal zum Öffnen der elektrisch leitenden Verbindung an die erste Steuereinheit 4 übermitteln, die dann wiederum die Kontaktpaarung 2 trennt durch entsprechende Ansteuerung des elektromechanischen Antriebs 3.

Die Schalt- und Schutzvorrichtung 1 ermöglicht durch die vorteilhafte schnelle Ansteuerung des elektromechanischen Antriebs 3 über die erste Steuereinheit 4 und durch die vorteilhafte Ausführung des elektromechanischen Antriebs 3 eine besonders schnelle Lichtbogenlöschgeschwindigkeit von < 1ms im Kurzschlussfall.

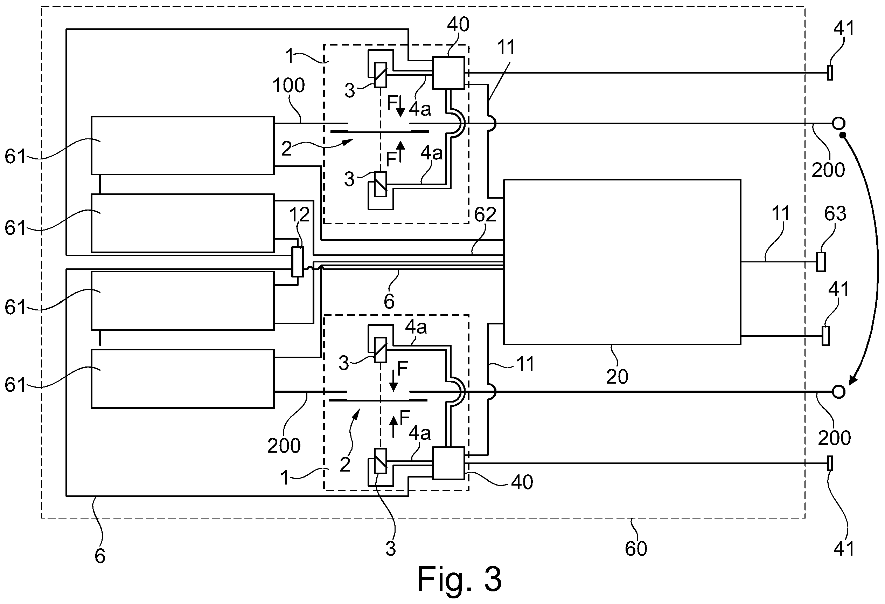

Der analoge Schaltungsteil mit festprogrammierten anwender-spezifischen integrierten Schaltungen (ASIC) 4 unterliegt keiner zeitraubenden Softwareroutine, sondern kann unmittelbar in Abhängigkeit der Stromanstiegszeiten und/oder der Stromhöhen die galvanische Trennung mittels Öffnung der Kontaktbrücke 2b direkt an der Kontaktpaarung 2, d. h. am Haupt-Kontaktsystem, auslösen. Der Regelbetrieb erfolgt über den digitalen Schaltungsteil (zweite Steuereinheit 5), der mittels üblicher Busverbindungen mit der Batteriesteuerung verbunden ist (was nachfolgend in Zusammenhang mit Figur 3 beschrieben wird.

Zudem ist die Schalt- und Schutzvorrichtung 1 reversibel, d. h. sie weist keine irreversiblen Sicherungselemente auf, die nach einem Kurzschlussfall ausgetauscht werden müssen, sondern - nach erfolgter Reparatur des Fahrzeuges - kann die Traktionsbatterien wieder zugeschaltet werden. Hierzu muss die zweite Steuereinheit 5 jedoch ein Freischaltsignal an die erste Steuereinheit 4 senden zur Wiederaufnahme eines Regelbetriebs des Hochvolt-Bordnetzes. Im Falle von erkannten Fehlauslösungen kann das Fahrzeug beispielsweise autark oder mittels Ferndiagnose und Freischaltungscode wieder in Betrieb genommen werden, dies ohne Werkstattaufenthalt.

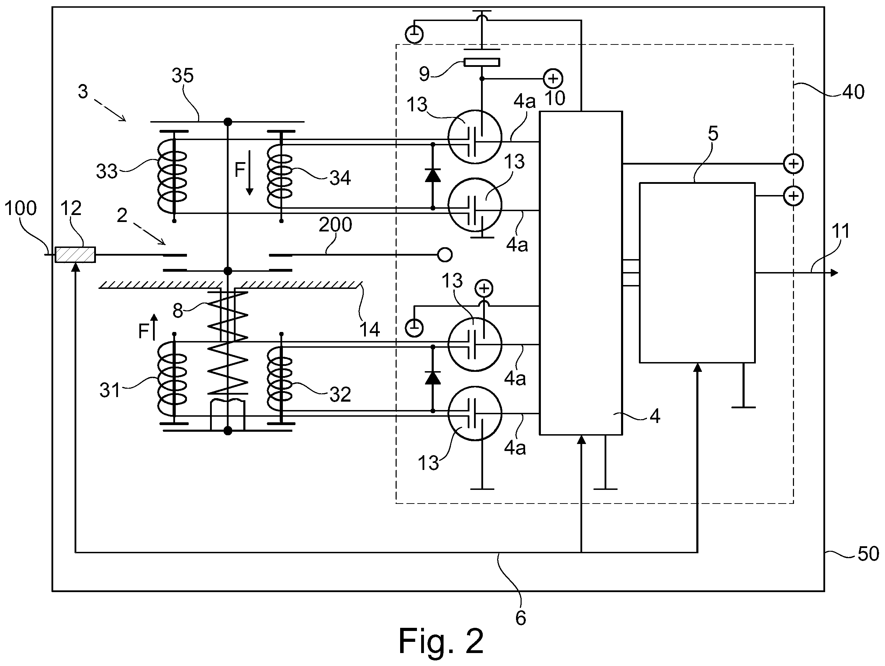

Figur 2 zeigt eine Schalt- und Schutzvorrichtung gemäß einer weiteren Ausführungsform. Die Schalt- und Schutzvorrichtung 1 für ein Hochvolt-Bordnetz fungiert als Hauptschütz 50, um einen Strompfad 100 zu einer Traktionsbatterie (nicht dargestellt) eines Fahrzeugs mit einem Hauptstrompfad 200 zum fahrzeugseitigen Teil des Bordnetzes wahlweise elektrisch zu verbinden oder zu trennen. Vorstehend wurde bereits festgestellt, dass gleiche oder äquivalente Elemente in allen Figuren mit denselben Bezugszeichen bezeichnet und zum Teil nicht gesondert beschrieben sind. Nachfolgend wird daher hauptsächlich auf die Besonderheiten und Unterschiede im Vergleich zur Ausführungsform der Figur 1 eingegangen.

Die mindestens eine erste Antriebsspule (Haltespule) weist nun aus Redundanz- und Effizienzgründen zwei Antriebsspulen 31, 32 auf. Entsprechend gilt für die zweite Antriebsspule (Öffnungsspule), die ebenfalls zwei Spulen 33, 34 aufweist. Die zwei ersten Antriebspulen 31, 32 erzeugen im bestromten Zustand jeweils eine Kraft F, die entgegengesetzt zur Öffnungskraft der Rückstellfeder 8 ist, um die Kontaktpaarung 2 zu schließen. Dagegen erzeugen die zwei zweiten Antriebspulen 33, 34 im bestromten Zustand jeweils eine Kraft F (zweite Öffnungskraft), die parallel zur Öffnungskraft der Rückstellfeder 8 ist, um die Kontaktpaarung 2 zu öffnen. Die zwei ersten Antriebsspulen und die zwei zweiten Antriebsspulen 33, 34 sind in diesem Ausführungsbeispiel beispielhaft auf gegenüberliegenden Seiten in Bezug auf die Festkontaktstücke der Kontaktpaarung 2 angeordnet.

Die erste Steuereinheit ist ausgebildet, bei Erfüllung einer Einschaltbedingung (d. h. die Kontaktpaarung soll geschlossen werden) beide erste Antriebsspulen 31, 32 zu bestromen und nach Schließen der elektrischen Verbindung und zum Halten der Schließstellung nur noch eine der ersten Antriebsspulen 31, 32 als Haltespule zu bestromen.

Die erste Steuereinheit 4 ist eingerichtet, bei Erfüllung der ersten Sicherheitsabschaltbedingung ein erstes Ausgangssignal an die beiden ersten Antriebsspulen 31, 32 zum Abbau und/oder zur Reduzierung der Schließkraft und ein zweites Ausgangssignal an die beiden zweiten Antriebsspulen 33, 34 zum Aufbau und/oder zur Erhöhung der zweiten Öffnungskraft zu erzeugen. Die Schalt- und Schutzvorrichtung umfasst hierzu ferner einen durch eine Niedervolt-Spannung 10 gespeisten Speicher 9 für eine galvanisch eng benachbarte elektrische Abschaltenergie, hier beispielhaft in Form eines Kondensators 9, zur niederohmigen Versorgung der zweiten Antriebspulen 33, 34 mit elektrischer Energie.

Die erste Steuereinheit 4, die zweite Steuereinheit 5, sowie die Halbleiterschalter 13 bilden zusammen eine Steuerung des elektromechanischen Antriebs 3, und somit als Gruppe eine Steuervorrichtung bzw. ein Steuermodul 40, was durch die gestrichelte Linie dargestellt ist.

Figur 3 zeigt einen Teil eines Hochvolt-Bordnetzes gemäß einer weiteren Ausführungsform. Ein Batteriepack 6 umfasst in mehreren Ebenen (hier beispielhaft vier Ebenen) angeordnete Batteriemodule 61 aus jeweils mehreren Speicherzellen zur Speicherung elektrischer Antriebsenergie. Das Batteriepack wird durch eine Batteriesteuervorrichtung, BMCM (engl. battery management control module) gesteuert, welche über Steuerleitungen 62 mit den Zellmodulsteuerungen der Batteriemodule 61 in Signalverbindung steht. Das BMCM 20 hat eine CAN-Schnittstelle 63. Das BMCM 20 ist in an sich bekannter Weise ausgebildet, den Betrieb der Batteriemodule 61 zu überwachen, inkl. den Strom, die Spannung und die Temperatur der Batteriemodule 61. Ferner sind im BMCM 20 verschiedene Diagnose- und Sicherheitsfunktionen implementiert. An den Anschlussstellen des Hauptstrompfads 200 zum Fahrzeug liegt eine Hochvolt-Spannung von mehreren hundert Volt eines nicht geerdeten Stromnetzes (IT-Netz, eng: isolated terra Netz) an. Die Vorrichtungen der Signalabgriffe und Signalverarbeitungen sind galvanisch getrennt und isoliert zum Hauptstrompfad der Hochvolt-Spannung ausgeführt.

Vorliegend kommen jeweils sowohl für den Plus-Hauptstrompfad als auch den Minus-Hauptstrompfad ein Steuermodul 40 zum Einsatz, wie es in Figur 2 beschrieben wurde. Die Steuermodule 40 umfassen jeweils die erste Steuereinheit 4, die zweite Steuereinheit 5, sowie die Halbleiterschalter 13 und dienen zur Steuerung der elektromechanischen Antriebe 3, die wie in Figur 1 oder Figur 2 beschrieben ausgebildet sein können. Hierzu sind die Steuermodule 40 über einen Datenbus, z. B. den CAN-Bus, mit dem BMCM 20 verbunden. Mit dem Bezugszeichen 41 ist die Spannungsversorgung des BMCM 20 sowie der Steuermodule 40 bezeichnet. Die zweite Steuereinheit 5 kann ferner dazu ausgebildet sein, zu Diagnosezwecken einen Funktions- oder Alterungszustands der Schalt- und Schutzvorrichtung 1, insbesondere der Kontaktpaarung 2, zu ermitteln, beispielsweise durch Protokollierung einer Anzahl ausgelöster Sicherheitsabschaltungen und/oder einer Anzahl von Schließ- und/oder Öffnungsvorgängen im Regelbetrieb. Die kann im Fehlerfall zur weiteren Diagnose verwendet werden.

Die Schalt- und Schutzvorrichtung ist, wie bereits erwähnt, reversibel ausgeführt. Damit kommt zum Ausdruck das - gegenüber dem Stand der Technik - keine irreversiblen Sicherungselemente nach einem Kurzschlussfall ausgetauscht werden müssen, sondern - nach erfolgter Reparatur des Fahrzeuges - die Traktionsbatterien wieder zugeschaltet werden können. Das minimiert die Gefahr von Liegenbleibern aus unwichtigem Grund und den Aufwand einer Feldinstandsetzung (Austausch von Pyro-Fuses) bei HV-Energiebetrags-Abweichungen signifikant.

### Bezugszeichenliste

- 1: Schalt- und Schutzvorrichtung für ein Hochvolt-Bordnetz
- 2: Kontaktpaarung
- 2a: Festkontaktstück
- 2b: Kontaktbrücke
- 3: Elektromechanischer Antrieb
- 4: Erste Steuereinheit, z. B. ASIC
- 4a: Steuerleitung
- 5: Zweite Steuereinheit (Mikrocontroller)
- 6: Leitung für Strom- oder Spannungsmesssignal
- 7: Signalleitung
- 8: Erste Feder
- 9: Energiespeicher, z. B. Kondensator
- 10: Niedervolt-Spannungsversorgung
- 11: Datenbus, z. B. CAN
- 12: Shunt
- 13: Halbleiterschalter
- 14: Abstützung
- 15: Freilaufdiode
- 20: Batteriesteuervorrichtung, BMCM
- 31: Erste Antriebsspule
- 32: Erste Antriebsspule
- 33: Zweite Antriebsspule
- 34: Zweite Antriebsspule
- 35: Ankermechanismus
- 40: Steuervorrichtung
- 41: Spannungsversorgung
- 50: Hauptschütz
- 60: Batteriepack
- 61: Batteriemodul aus mehreren Zellen
- 62: Steuerleitungen
- 63: CAN-Schnittstelle
- 100: Strompfad zur Batterie
- 200: Hauptstrompfad zum Fahrzeug

## Patentansprüche

1. Schalt- und Schutzvorrichtung (1) für ein Hochvolt-Bordnetz, umfassend
a) eine Kontaktpaarung (2) mit einer Doppelkontaktstelle, bei der zwei Festkontaktstücke (2a) mittels einer beweglichen Kontaktbrücke (2b) elektrisch leitend verbindbar und wieder trennbar sind;
b) einen ansteuerbaren elektromechanischen Antrieb (3), mittels dessen eine Steuerkraft auf die Kontaktbrücke (2b) erzeugbar ist, zum wahlweisen Schließen und Öffnen der elektrisch leitenden Verbindung; und
c) eine erste Steuereinheit (4), wobei die erste Steuereinheit (4) eingerichtet ist, Ausgangssignale zur Ansteuerung des elektromechanischen Antriebs (3) zu erzeugen,
**dadurch gekennzeichnet, dass** die erste Steuereinheit (4) als anwendungsspezifische integrierte Schaltung, ASIC (4), oder als eine vor Ort programmierbare Logikgatter-Anordnung, FPGA, oder als reine Analogschaltung mittels Komparatorschaltung ausgebildet ist, und in Abhängigkeit eines, vorzugsweise strom- und/oder spannungsbasierten, Eingangssignals zu bestimmen, ob eine erste Sicherheitsabschaltbedingung erfüllt ist, und bei Erfüllung der ersten Sicherheitsabschaltbedingung ein Ausgangssignal zum Öffnen der elektrisch leitenden Verbindung zu erzeugen, wobei
die erste Steuereinheit (4) eingerichtet ist, nach einem durch Erfüllung der ersten Sicherheitsabschaltbedingung erfolgtem Öffnen der elektrischen Verbindung erst dann ein Ausgangssignal für den elektromechanischen Antrieb (3) zum Schließen der elektrischen Verbindung zu erzeugen, falls die erste Steuereinheit (4) ein Freischaltsignal zur Wiederaufnahme eines Regelbetriebs des Hochvolt-Bordnetzes von einer zweiten Steuereinheit (5) empfängt.

2. Schalt- und Schutzvorrichtung (1) nach Anspruch 1,
a) ferner umfassend eine zweite Steuereinheit (5), die als Mikrocontroller ausgebildet ist, und zur Datenkommunikation, vorzugsweise über einen Datenbus (11), mit einem Batterie-Management-System, BMS, eingerichtet ist, wobei die zweite Steuereinheit ferner eingerichtet ist, zur Durchführung eines Regelbetriebs des Hochvolt-Bordnetzes Steuersignale zum wahlweise Schließen und Öffnen der elektrisch leitenden Verbindung zu erzeugen und an die erste Steuereinheit (4) zu übermitteln, und
b) wobei die erste Steuereinheit (4) ferner eingerichtet ist, in Abhängigkeit der Steuersignale der zweiten Steuereinheit entsprechende Ausgangssignale zur Ansteuerung des elektromechanischen Antriebs (3) zum wahlweise Schließen und Öffnen der elektrisch leitenden Verbindung zu erzeugen.

3. Schalt- und Schutzvorrichtung (1) nach einem der vorherigen Ansprüche, ferner umfassend eine vorgespannte erste Feder (8), die ausgebildet ist, eine erste Öffnungskraft auf die Kontaktbrücke zu erzeugen.

4. Schalt- und Schutzvorrichtung (1) nach Anspruch 3, wobei der elektromechanische Antrieb (3) mindestens eine in Signalverbindung mit der ersten Steuereinheit (4) stehende erste Antriebsspule (31, 32) umfasst, die ausgebildet ist, eine zur ersten Öffnungskraft entgegengesetzte magnetische Schließkraft gemäß dem Ausgangssignal zu erzeugen.

5. Schalt- und Schutzvorrichtung (1) nach Anspruch 4, wobei die mindestens eine erste Antriebsspule (31, 32) zwei erste Antriebsspulen umfasst und die erste Steuereinheit ausgebildet ist, bei Erfüllung einer Einschaltbedingung beide erste Antriebsspulen zu bestromen und nach Schließen der elektrischen Verbindung und zum Halten der Schließstellung nur noch eine der ersten Antriebsspulen (31, 32) als Haltespule zu bestromen.

6. Schalt- und Schutzvorrichtung (1) nach Anspruch 4 oder 5, wobei der elektromechanische Antrieb (3) mindestens eine in Signalverbindung mit der ersten Steuereinheit stehende zweite Antriebsspule (33, 34) umfasst, die ausgebildet ist, eine zur ersten Öffnungskraft parallele zweite Öffnungskraft gemäß dem Ausgangssignal zu erzeugen.

7. Schalt- und Schutzvorrichtung (1) nach Anspruch 6, wobei die zweite Öffnungskraft durch die mindestens eine zweite Antriebsspule
a) unmittelbar als magnetische Kraft erzeugt wird und/oder
b) mittelbar durch Betätigung einer vorspannbaren und/oder arretierbaren zweiten Feder erzeugt wird, wobei die zweite Feder durch die mindestens eine zweite Antriebsspule in einen vorgespannten und/oder arretierten Zustand bringbar ist.

8. Schalt- und Schutzvorrichtung (1) nach Anspruch 6 oder 7, ferner aufweisend einen durch eine Niedervolt-Spannung (10) gespeisten Speicher (9) für eine elektrische Abschaltenergie zur Versorgung der mindestens einen zweiten Antriebspule mit elektrischer Energie, der vorzugsweise durch einen Kondensator (9) oder eine Spule gebildet ist.

9. Schalt- und Schutzvorrichtung (1) nach Anspruch 8, wobei die elektrische Abschaltenergie eine galvanisch eng benachbarte elektrische Abschaltenergie zur niederohmigen Versorgung der mindestens einen zweiten Antriebspule mit elektrischer Energie ist.

10. Schalt- und Schutzvorrichtung (1) nach einem der Ansprüche 6 bis 9, wobei die erste Steuereinheit (4) eingerichtet ist, bei Erfüllung der ersten Sicherheitsabschaltbedingung ein erstes Ausgangssignal an die mindestens eine erste Antriebsspule (31, 32) zum Abbau und/oder zur Reduzierung der Schließkraft und ein zweites Ausgangssignal an die mindestens eine zweite Antriebsspule (33, 34) zum Aufbau und/oder zur Erhöhung der zweiten Öffnungskraft zu erzeugen.

11. Schalt- und Schutzvorrichtung (1) nach Anspruch 6 bis 10, wobei die mindestens eine erste Antriebsspule (31, 32) und mindestens eine zweite Antriebsspule (33, 34)
a) auf gegenüberliegenden Seiten, oder
b) auf der gleichen Seite
in Bezug auf die Festkontaktstücke (2a) angeordnet sind.

12. Schalt- und Schutzvorrichtung (1) nach einem der vorherigen Ansprüche, wobei das Eingangssignal der ersten Steuereinheit (4) ein strom- und/oder spannungsbasierter Messwert ist, der an einer abgeschirmten Leitung als Induktionsstromwerte aus einer Stromzange in einem Hauptstrompfad oder an einem Shunt (12) ermittelt wird.

13. Schalt- und Schutzvorrichtung (1) nach einem der vorherigen Ansprüche, wenn abhängig von Anspruch 2, wobei die zweite Steuereinheit (5) eingerichtet ist,
a) bei Erfüllung einer zweiten Sicherheitsabschaltbedingung ein Steuersignal zum Öffnen der elektrisch leitenden Verbindung an die erste Steuereinheit (4) zu übermitteln, und/oder
b) zu Diagnosezwecken einen Funktions- oder Alterungszustands der Schalt- und Schutzvorrichtung (1), vorzugsweise der Kontaktpaarung, zu ermitteln, beispielsweise durch Protokollierung einer Anzahl ausgelöster Sicherheitsabschaltungen und/oder einer Anzahl von Schließ- und/oder Öffnungsvorgängen im Regelbetrieb; und/oder
c) das Eingangssignal, vorzugsweise das strom- und/oder spannungsbasierte Eingangssignal zu empfangen; und/oder
d) bei Erfüllung einer Freischaltbedingung ein Freischaltsignal zur Wiederaufnahme eines Regelbetriebs des Hochvolt-Bordnetzes an die erste Steuereinheit (3) zu übermitteln.

14. Fahrzeug, das zumindest teilweise elektrisch antreibbar ist, vorzugsweise Nutzfahrzeug, umfassend mindestens eine Schalt- und Schutzvorrichtung (1) nach einem der vorherigen Ansprüche.

## Claims

1. A switching and protection device (1) for a high-voltage on-board electrical system, comprising:
a) a contact arrangement (2) having a double contact point, in which two fixed contact pieces (2a) are electrically conductively connectable and separable again by means of a movable contact bridge (2b);
b) a controllable electromechanical drive (3) by means of which a control force can be generated on the contact bridge (2b) for selectively closing and opening the electrically conductive connection; and
c) a first control unit (4), wherein the first control unit (4) is configured to generate output signals for controlling the electromechanical drive (3),
**characterized in that** the first control unit (4) is designed as an application-specific integrated circuit, ASIC (4), or as a field-programmable gate array, FPGA, or as a pure analog circuit by means of a comparator circuit, and is configured to determine, depending on an input signal, preferably based on current and/or voltage-based input signal, whether a first safety shutdown condition is fulfilled, and, upon fulfillment of the first safety shutdown condition, to generate an output signal for opening the electrically conductive connection, wherein
the first control unit (4) is configured, after an opening of the electrical connection has occurred due to fulfillment of the first safety shutdown condition, to generate an output signal for the electromechanical drive (3) for closing the electrical connection only if the first control unit (4) receives an enable signal for resuming a normal operation of the high-voltage on-board electrical system from a second control unit (5).

2. The switching and protection device (1) according to claim 1,
a) further comprising a second control unit (5) designed as a microcontroller and configured for data communication, preferably via a data bus (11), with a battery management system (BMS), wherein the second control unit is further configured to generate control signals for selectively closing and opening the electrically conductive connection for carrying out normal operation of the high-voltage on-board electrical system and to transmit them to the first control unit (4), and
b) wherein the first control unit (4) is further configured to generate corresponding output signals for controlling the electromechanical drive (3) for selectively closing and opening the electrically conductive connection depending on the control signals of the second control unit.

3. The switching and protection device (1) according to any one of the preceding claims, further comprising a preloaded first spring (8) configured to generate a first opening force on the contact bridge.

4. The switching and protection device (1) according to claim 3, wherein the electromechanical drive (3) comprises at least one first drive coil (31, 32) in signal connection with the first control unit (4), which is configured to generate, according to the output signal, a magnetic closing force opposite to the first opening force.

5. The switching and protection device (1) according to claim 4, wherein the at least one first drive coil (31, 32) comprises two first drive coils and the first control unit is configured, upon fulfillment of a switch-on condition, to energize both first drive coils and, after closing of the electrical connection and for maintaining the closed position, to energize only one of the first drive coils (31, 32) as a holding coil.

6. The switching and protection device (1) according to claim 4 or 5, wherein the electromechanical drive (3) comprises at least one second drive coil (33, 34) in signal connection with the first control unit, which is configured to generate, according to the output signal, a second opening force parallel to the first opening force.

7. The switching and protection device (1) according to claim 6, wherein the second opening force is generated by the at least one second drive coil
a) directly as a magnetic force and/or
b) indirectly by actuating a second spring that can be preloaded and/or latched, wherein the second spring can be brought into a preloaded and/or latched state by the at least one second drive coil.

8. The switching and protection device (1) according to claim 6 or 7, further comprising an energy store (9) supplied by a low-voltage voltage (10) for an electrical shutdown energy for supplying electrical energy to the at least one second drive coil, which is preferably formed by a capacitor (9) or an inductor.

9. The switching and protection device (1) according to claim 8, wherein the electrical shutdown energy is a galvanically closely adjacent electrical shutdown energy for low-resistance supply of electrical energy to the at least one second drive coil.

10. The switching and protection device (1) according to any one of claims 6 to 9, wherein the first control unit (4) is configured, upon fulfillment of the first safety shutdown condition, to generate a first output signal to the at least one first drive coil (31, 32) for reducing and/or decreasing the closing force and a second output signal to the at least one second drive coil (33, 34) for building up and/or increasing the second opening force.

11. The switching and protection device (1) according to any one of claims 6 to 10, wherein the at least one first drive coil (31, 32) and the at least one second drive coil (33, 34) are arranged
a) on opposite sides, or
b) on the same side
with respect to the fixed contact pieces (2a).

12. The switching and protection device (1) according to any one of the preceding claims, wherein the input signal of the first control unit (4) is a current- and/or voltage-based measured value determined on a shielded line as induction current values from a current clamp in a main current path or at a shunt (12).

13. The switching and protection device (1) according to any one of the preceding claims, when dependent on claim 2, wherein the second control unit (5) is configured
a) to transmit, upon fulfillment of a second safety shutdown condition, a control signal for opening the electrically conductive connection to the first control unit (4), and/or
b) to determine, for diagnostic purposes, a functional or aging state of the switching and protection device (1), preferably of the contact arrangement, for example by logging a number of triggered safety shutdowns and/or a number of closing and/or opening operations during normal operation; and/or
c) to receive the input signal, preferably the current- and/or voltage-based input signal; and/or
d) to transmit, upon fulfillment of an enable condition, an enable signal for resuming normal operation of the high-voltage on-board electrical system to the first control unit (4).

14. A vehicle, which is at least partially electrically drivable, preferably a commercial vehicle, comprising at least one switching and protection device (1) according to any one of the preceding claims.

## Revendications

1. Dispositif de commutation et de protection (1) pour un réseau de bord à haute tension, comprenant
a) un appariement de contacts (2) avec un double point de contact, dans lequel deux pièces de contact fixes (2a) peuvent être connectées et déconnectées électriquement au moyen d'un pont de contact mobile (2b) ;
b) un entraînement électromécanique (3) pouvant être piloté, au moyen duquel une force de commande peut être générée sur le pont de contact (2b) pour au choix fermer et ouvrir la connexion électriquement conductrice ; et
c) une première unité de commande (4), la première unité de commande (4) étant mise au point pour générer des signaux de sortie pour piloter l'entraînement électromécanique (3), **caractérisé en ce que** la première unité de commande (4) est formée comme un circuit intégré à application spécifique ASIC (4), ou comme un réseau programmable de porte sur site FPGA, ou comme un circuit analogique pur au moyen d'un circuit comparateur, et pour déterminer, en fonction d'un signal d'entrée de préférence basé sur le courant et/ou basé sur la tension, si une première condition de coupure de sécurité est satisfaite, et pour générer un signal de sortie pour ouvrir la connexion électriquement conductrice lorsque la première condition de coupure de sécurité est satisfaite,
la première unité de commande (4) étant mise au point pour ne générer un signal de sortie pour l'entraînement électromécanique (3) pour fermer la connexion électrique qu'après une ouverture de la connexion électrique effectuée par le fait que la première condition de coupure de sécurité est satisfaite dans le cas où la première unité de commande (4) reçoit d'une deuxième unité de commande (5) un signal de libération pour reprendre un fonctionnement normal du réseau de bord à haute tension.

2. Dispositif de commutation et de protection (1) selon la revendication 1,
a) comprenant en outre une deuxième unité de commande (5) qui est formée comme un microcontrôleur et qui est mise au point pour la communication de données, de préférence par un bus de données (11), avec un système de gestion de batterie BMS, la deuxième unité de commande étant en outre mise au point pour générer des signaux de commande pour au choix fermer et ouvrir la connexion électriquement conductrice et pour les transmettre à la première unité de commande (4) pour mettre en œuvre un fonctionnement normal du réseau de bord à haute tension, et
b) la première unité de commande (4) étant en outre mise au point pour générer, en fonction des signaux de commande de la deuxième unité de commande, des signaux de sortie correspondants pour piloter l'entraînement électromécanique (3) pour au choix fermer et ouvrir la connexion électriquement conductrice.

3. Dispositif de commutation et de protection (1) selon l'une des revendications précédentes, comprenant en outre un premier ressort précontraint (8) qui est formé pour générer une première force d'ouverture sur le pont de contact.

4. Dispositif de commutation et de protection (1) selon la revendication 3, l'entraînement électromécanique (3) comprenant au moins une première bobine d'entraînement (31, 32) se trouvant en liaison de signalisation avec la première unité de commande (4), qui est formée pour générer une force de fermeture magnétique opposée à la première force d'ouverture selon le signal de sortie.

5. Dispositif de commutation et de protection (1) selon la revendication 4, l'au moins une première bobine d'entraînement (31, 32) comprenant deux premières bobines d'entraînement et la première unité de commande étant formée pour alimenter en courant les deux premières bobines d'entraînement lorsqu'une condition de mise sous tension est satisfaite et pour n'alimenter en courant qu'une seule des premières bobines d'entraînement (31, 32) après la fermeture de la connexion électrique et pour maintenir la position fermée.

6. Dispositif de commutation et de protection (1) selon la revendication 4 ou 5, l'entraînement électromécanique (3) comprenant au moins une deuxième bobine d'entraînement (33, 34) se trouvant en liaison de signalisation avec la première unité de commande, laquelle est formée pour générer une deuxième force d'ouverture parallèle à la première force d'ouverture selon le signal de sortie.

7. Dispositif de commutation et de protection (1) selon la revendication 6, la deuxième force d'ouverture étant générée par l'au moins une deuxième bobine d'entraînement a) directement comme une force magnétique et/ou b) étant générée indirectement par actionnement d'un deuxième ressort pouvant être précontraint et/ou pouvant être bloqué, le deuxième ressort pouvant être amené dans un état précontraint et/ou bloqué par l'au moins une deuxième bobine d'entraînement.

8. Dispositif de commutation et de protection (1) selon la revendication 6 ou 7, comprenant en outre un accumulateur (9) alimenté par une tension basse tension (10) pour une énergie de coupure électrique pour l'alimentation en énergie électrique de l'au moins une deuxième bobine d'entraînement, qui est formée de préférence par un condensateur (9) ou une bobine.

9. Dispositif de commutation et de protection (1) selon la revendication 8, l'énergie de coupure électrique étant une énergie de coupure électrique étroitement adjacente galvaniquement pour alimenter en énergie électrique à faible impédance l'au moins une deuxième bobine d'entraînement.

10. Dispositif de commutation et de protection (1) selon l'une des revendications 6 à 9, la première unité de commande (4) étant mise au point pour générer, lorsque la première condition de coupure de sécurité est satisfaite, un premier signal de sortie à l'au moins une première bobine d'entraînement (31, 32) pour supprimer et/ou pour réduire la force de fermeture et un deuxième signal de sortie destiné à l'au moins une deuxième bobine d'entraînement (33, 34) pour établir et/ou augmenter la deuxième force d'ouverture.

11. Dispositif de commutation et de protection (1) selon les revendications 6 à 10, l'au moins une première bobine d'entraînement (31, 32) et au moins une deuxième bobine d'entraînement (33, 34) étant disposées
a) sur des côtés opposés, ou
b) sur le même côté
par rapport aux pièces de contact fixes (2a).

12. Dispositif de commutation et de protection (1) selon l'une des revendications précédentes, le signal d'entrée de la première unité de commande (4) étant une valeur de mesure basée sur le courant et/ou sur la tension, qui est déterminée sur une ligne blindée en tant que valeurs de courant d'induction à partir d'une pince ampèremétrique dans un trajet de courant principal ou sur un shunt (12).

13. Dispositif de commutation et de protection (1) selon l'une des revendications précédentes, lorsqu'elle dépend de la revendication 2, la deuxième unité de commande (5) étant mise au point pour
a) transmettre à la première unité de commande (4), lorsqu'une deuxième condition de coupure de sécurité est satisfaite, un signal de commande pour ouvrir la connexion électriquement conductrice, et/ou
b) déterminer à des fins de diagnostic, un état de fonctionnement ou de vieillissant du dispositif de commutation et de protection (1), de préférence de l'appariement de contacts, par exemple en enregistrant un certain nombre de circuits de coupure de sécurité déclenchés et/ou un certain nombre de processus de fermeture et/ou d'ouverture pendant le fonctionnement normal ; et/ou
c) recevoir le signal d'entrée, de préférence le signal d'entrée basé sur le courant et/ou la tension ; et/ou
d) transmettre à la première unité de commande (3), lorsqu'une condition de libération est satisfaite, un signal de libération pour reprendre le fonctionnement normal du réseau de bord à haute tension.

14. Véhicule, qui peut être entraîné au moins en partie électriquement, de préférence véhicule utilitaire, comprenant au moins un dispositif de commutation et de protection (1) selon l'une des revendications précédentes.
